# EUROPEAN PATENT SPECIFICATION

(11) **EP 2 278 757 B1**
(45) Date of publication and mention of the grant of the patent: **28.05.2014**
(21) Application number: 09305625.7
(22) Date of filing: 30.06.2009
(51) Int. Cl.: H04L 12/801, H04L 12/825, H04L 12/835

(54) **Flow control mechanism for data transmission links**
Durchflusssteuermechanismus für Datenübertragungsverbindungen
Mécanisme de contrôle de flux pour liaisons de transmission de données

(43) Date of publication of application: 26.01.2011
(73) Proprietor: Alcatel Lucent, 75007 Paris (FR)
(72) Inventor: Gehrke, Gerhard, 90480, Nuernberg (DE); Brachmann, Markus, 90453, Nuernberg (DE); Constantini, Carlo, 23880, Casatenovo (IT); Corradini, Maurizio, 27036, Mortara (PV) (DE)
(74) Representative: Mildner, Volker

(56) References cited:
- JANG-PING SHEU ET AL: "Hybrid Congestion Control Protocol in Wireless Sensor Networks" VEHICULAR TECHNOLOGY CONFERENCE, 2008. VTC SPRING 2008. IEEE, IEEE, PISCATAWAY, NJ, USA, 11 May 2008 (2008-05-11), pages 213-217, XP031255520 ISBN: 978-1-4244-1644-8
- MISHRA P P ET AL: "ON HOP-BY-HOP RATE-BASED CONGESTION CONTROL" IEEE / ACM TRANSACTIONS ON NETWORKING, IEEE / ACM, NEW YORK, NY, US, vol. 4, no. 2, 1 April 1996 (1996-04-01), pages 224-239, XP000582674 ISSN: 1063-6692
- BENMOHAMED L ET AL: "Feedback control of congestion in store-and-forward datagram networks: the case of a single congested node" PROCEEDINGS OF THE CONFERENCE ON DECISION AND CONTROL. TUCSON, DEC. 16 19921216; 19921216 - 19921218 NEW YORK, IEEE, US, vol. CONF. 31, 16 December 1992 (1992-12-16), pages 991-996, XP010107919 ISBN: 978-0-7803-0872-5

## Description

### Field of the Invention

The present invention relates to the field of telecommunications and more particularly to a method and related apparatus for performing flow control on a data transmission link.

### Background of the Invention

Ethernet is a popular layer 2 Protocol for transport of packetized data. The so called PAUSE or flow control mechanism is used for Ethernet local areas network (LAN) point-to-point links in order to guarantee lossless transport of data packets between two devices of data equipment. It allows a receiving device to send back a backpressure signal to the transmitting device typically if a buffer at the receiving device is going to fill up to its limit. In a typical application, the Ethernet link has more data feeding capacity (i.e. digital speed rate) than a subsequent link which drains the data from the receiving device. This subsequent link may be part of a telecommunication transport network, e.g. a wide area network (WAN), where the costs per capacity is usually higher than in a LAN.

The mentioned backpressure signal is typically contained in PAUSE request frames which are sent back to the transmitter. They request the transmitter to stop transmission for a certain period of time. If during this period of time a next PAUSE frame is already received, then the execution of the current PAUSE frame is terminated and the newly received PAUSE request frame is executed, only. This flow control mechanism is defined in IEEE 802.3-2008 Annex 31 B. For inter-operability issues, it is mandatory that a new development is backwards compatible with already deployed devices fulfilling this behaviour.

The article "Hybrid Congestion Control Process in Wireless Sensor Networks" by J.-P. Sheu et al., proc. Vehicular Technology Conference 2008, IEEE, pp. 213-217, describes a wireless network of sensors. Each sensor contributes own data, receives data from upstream sensors and forwards data to downstream sensors. The nodes estimate the number of flows coming from each upstream neighbour and assign transmission rates based on fairness, once congestion is detected. Each node dynamically calculates its congestion degree from its current remaining buffer size and the net flow size. The nodes exchange their congestion values, so that each node can use its own and its neighbours' congestion values to prevent congestions.

The article "On Hop-by-Hop Rate-Based Congestion Control" by P. Mishra et al., IEEE Transactions on Networking, vol 4 no.2, 1.April 1996, pp. 224-239 describes hop-by-hop backpressure mechanism for controlling congestion in a packet switches network.

### Summary of the Invention

For the flow control mechanism to operate, the receiver must store received data packets in a buffer and send a PAUSE frame before the buffer overflows. This will, however only show effect after the transmitting device has received the PAUSE fame and reacts to it by stopping transmission for a defined period of time. Hence, the buffer must be large enough to store all packets that are received until the transmitter reacts. Hence, the higher the LAN rate and the longer the round-trip-time (RTT), the more buffer is needed. It is an object of the present invention to provide a method and related receiver, which allows loss-less packet data transmission using a flow control mechanism and which reduces the requirement on buffer size.

These and other objects that appear below ore achieved by o method and related apparatus for adjusting a data rate of a packet data stream between a transmitter and a receiver using a flow control mechanism. The receiver receives the packet data stream and buffers it in a buffer memory, which is drained at a substantially constant transmission rate. One or more backpressure requests are sent from the receiver back to the transmitter. The backpressure requests contain a backpressure value which indicates a waiting time for the transmitter to suspend transmission of further data packets. This backpressure value contains a static backpressure component initially determined to match a nominal rate of the packet data stream and the transmission rate, and a dynamic backpressure component dynamically determined from the fill state of the buffer memory.

### Brief Description of the Drawings

Preferred embodiments of the present invention will now be described with reference to the accompanying drawings in which
- figure 1: shows block diagram of a transmitter and a receiver embodying a flow control mechanism and
- figure 2: shows an edge node of a transport network.

### Detailed Description of the Invention

Typically, a receiving device temporarily stores every received data packet into a FIFO buffer. The subsequent WAN link drains the FIFO buffer with its particular rate. If a certain fill state threshold of the FIFO buffer is reached, i.e. an upper watermark is crossed, a backpressure signal is sent back to the transmitter. When later on a certain fill state threshold has been undercut, i.e. a lower watermark is crossed, then a backpressure release signal is sent. In terms of control theory this is a "2-point closed-loop feedback control system".

Also typically, the backpressure signal uses a simple stop/start (off/on) semantic. In practice, "stop" is realized by requesting the maximal possible time span to stop transmission, while re"start" is realized by requesting a time span of zero.

With long LAN links, significant buffer sizes are needed at the receiver, because all the bits must be stored which are already on the way respectively will still be brought on the way until the PAUSE request frame is sent back to the transmitter and executed by it so that the transmission is stopped. A too small buffer would over-run and data would be lost.

On top of this, further memory is needed to store those bits in advance, which are to be fed into the subsequent WAN link after it has been defected that the lower threshold has been undercut until the PAUSE off request frame has restarted the transmitter and these next bits have been received and put into the FIFO buffer. Else, the buffer would under-run, and the leased WAN link capacity cannot be fully utilized.

It can easily be understood that the higher the LAN rate and the longer the round-trip-time (RTT), the more buffer is needed. With nowadays extended reaches of LAN links up to 70 km (which causes a long travel time because of the given physical speed of light of ∼5 µs/km) in combination of high digital speed rate of these LAN links (e.g, 10 Gbit/s) the necessary buffer size becomes significant. The technical term usually taken to quantify this physical conditions is called "bandwidth-deloy-product".

Besides the costs for buffer memory, there are also other drawbacks related to the size of the involved buffer. By the reactive way of working of the mechanism described so for, the location where the data of a burst of frames is actually stored is oscillating in huge amplitudes between the buffer of the receiver and the buffer of the transmitter. While this pumping effect is not visible on the WAN link, it is still affecting the utilization of the buffer of the transmitter. Not all transmitter designs available today might have sufficient buffer, while it might be simple to expand their reach by just replacing the transmitter optics with a 70 km version without big effort. More complicate, those transmitters might seem to have still sufficient buffer in a transmission test, but only at the expense of the overall burst capability of the transmitting device. This hidden lack of buffer of the transmitter might not be detected by initial measurements when setting up such a leased private line service and it could firstly appear later during runtime of the service, even after years of operation.

The inventors therefore propose in order to reduce the memory needs for the FIFO buffer and also to minimize the generated delay and delay variations a partially proactive method.

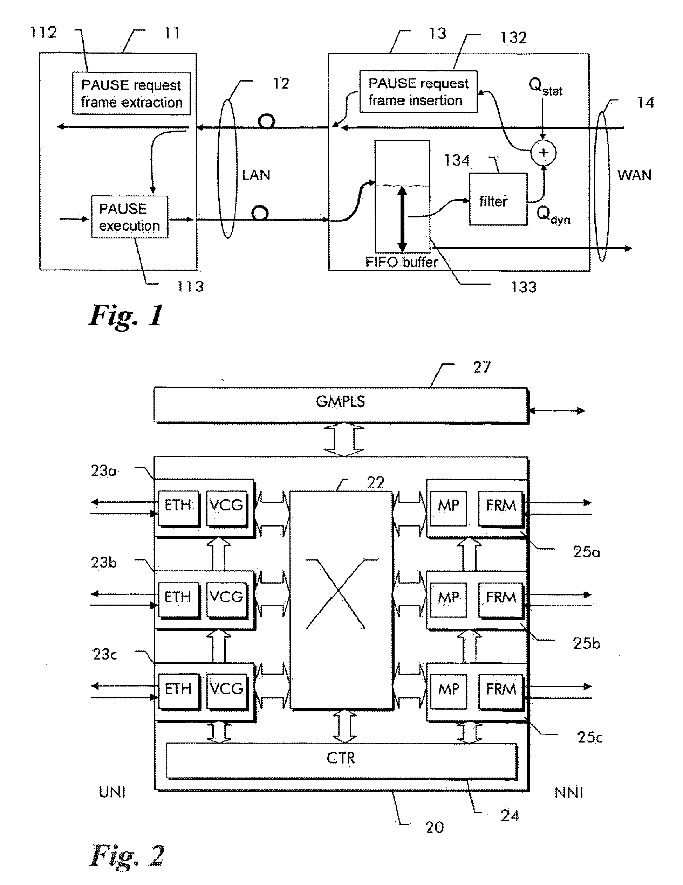

Figure 1 shows in a block diagram an embodiment of the flow control mechanism. A packet switch 11 is connected via a bidirectional point-to-point LAN link to an ingress node 13 of a wide area network (WAN). At ingress node 13, data packets received-from packet switch 11 are stored in a buffer 133, from where they are read at the rate of the outgoing WAN connection 14. In order to avoid buffer overflow or underflow events, the filing level of buffer 133 is monitored. The monitor signals filtered by an optional filter 134, which levels short term variations. The result is then one contributor to the backpressure request value used PAUSE frame generator 132. Backpressure signals are then fed in reverse direction to LAN link 12.

At packet switch 11, backpressure requests are received and extracted by a PAUSE frame extraction unit 112. Upon receipt of a backpressure signal, PAUSE execution unit 113 executes the backpressure request by blocking packet transmission towards ingress node 13 for a certain period of time as indicated in the respectively received backpressure request.

Further to the dynamic process, which contributes to the backpressure requests with a dynamic value Q_{dyn}, an additional static value Qₛₜₐₜ is added at ingress node 13, Using a combination of dynamic and static backpressure components Q_{dyn} and Gₛₜₐₜ, a more steady signal flow can be achieved as will be explained below.

In the preferred embodiment, backpressure requests are sent periodically at points of times which can be independent of any threshold crossing events of the fill state of the receive buffer. The period is a freely selectable design parameter and could preferably be shorter than the round-trip-time (RTT) of LAN link 12.

The backpressure request value is set individually per PAUSE request frame and contains the two components, i.e. the static signal component Qₛₜₐₜ and the dynamic backpressure element Q_{dyn}. The backpressure signal value to be inserted into the PAUSE frame is: Q = Qₛₜₐₜ + Q_{dyn}. This value corresponds to a time span, the transmitter is requested to wait with the transmission of the next packet.

The static signa component Qₛₜₐₜ is the proactive backpressure element. It is dimensioned in a way that, without the dynamic signal component Q_{dyn}, the remaining time which allows to transmit data in relation to the above mentioned selected period multiplied with the LAN rate nearly equals the WAN rate. Thus the FIFO buffer will not or will only fill up slowly. Because Qₛₜₐₜ does not depend on feed-back from the buffer fill state it represents an "open loop" control element.

The static backpressure component therefore aims to achieve a coarse adjustment of the data rate of the packet data stream on the LAN link and takes into account how much the pocket data stream needs to be slowed down to match the data rate available at the WAN side.

For instance, if the LAN interface is a 10GE interface with a nominal data rate of 10GBit/s and the WAN connection uses a concatenation group of VC4-40v of 40 VC-4 having a total capacity of 6 GBit/s, the static backpressure component Qₛₜₐₜ can be determined such that it throttles down the data rate on the LAN link to 6 GBit/s, either. The backpressure value Q does not correspond directly to a waiting time value, since the absolute value of the waiting time value in the PAUSE frames obviously depends also on how often PAUSE frames are sent.

In the above embodiment, Qₛₜₐₜ is a predefined value that depends on the capacity of the WAN connection 14. In some implementations, the signal rate of WAN connection 14 can be configured in an adaptive way and can change in pre-defined steps. Hence, the static signal value Qₛₜₐₜ can be taken from a programmable table, which has been pre-provisioned in advance for all cases of possible speed rates of WAN connection 14.

Conversely, the dynamic signal component Q_{dyn} is the reactive backpressure element. It is derived from the current fill state of the elastic receive buffer 133. It therefore represents a "closed loop" control element. Q_{dyn} hence aims to achieve a fine adjustment of the data rate of the packet data stream from the LAN link 12.

Overall, the system can be characterized as a "discrete-time open and closed loop feedback control system".

The granularity of the current fill state should preferably be expressed in finer steps than the two above mentioned watermark crossings. Ideally, but not necessarily, the current fill state is expressed in bytes. For example, using a cyclic FIFO buffet, the fill state can be easily determined by the difference between address values of read and write address pointers of the buffer.

A further improvement relates to the timing of the PAUSE frames. Since in reverse direction from node 13 to node 11 regular traffic is usually transmitted, it may occur particularly in situations with high traffic load in the reverse direction data stream, that the PAUSE request frame cannot immediately be inserted. The data frame which is currently being sent must be finished to be transmitted. To avoid such additional RTT, the dynamic signal component Q_{dyn} is determined at such points in time when it is possible to send a PAUSE request frame.

The optional filter 134 functions to fitter out periodical effects onto the buffer fill state caused by the proactive component Qₛₜₐₜ. Alternatively, it would be possible over-sample the buffer fill state at multiple points of time between sending two PAUSE request frames and calculate an average value.

Furthermore filter 134 allows to modify the system response, if desired. Basically filter 134 can slow down the system response to avoid overreactions in case of a long RTT of a long LAN link.

Slowing-down system response on the one hand brings back the need for more buffer at the receiver if the some system settings shall be also used in other applications with shorter LAN links. This is the natural effect of any closed loop system with a varying dead-time. However by the fact that the backpressure signal now is composed of Q_{dyn} and Qₛₜₐₜ and the dimensioning of the latter is independent of the LAN link length, only the smaller component Q_{dyn} slows down the system response, Therefore also the related buffer size can be dimensioned much smaller.

The described flow control mechanism has a number of advantages. First of all, no adaptation of parameter to the link length is required. In general, the existing PAUSE mechanism would allow some fine tuning of the backpressure parameters in accordance to the length of the LAN link and in accordance to the ratio of the speed rates between LAN and WAN link to mitigate some of the aforementioned disadvantageous of the state of the art. This, however, would require some undesired set-up procedures which impairs the well received plug-and-play behaviour of nowadays LAN link technology. By avoiding such configuration needs, cost savings by less involvement of service personnel for initial service setup of the Ethernet receiver are achieved.

Moreover, the proactive backpressure by Qₛₜₐₜ significantly reduces the pumping amplitudes of delay variation at the transmitter buffer. Such delay variations, which contribute to packet litter generation and are in principle unavoidable at the LAN link in case of flow control coming into action, are converted to higher jitter frequencies and lower jitter amplitudes. With this method used at the receiver side, also transmitters, which had originally not been designed for a certain link length, can be upgraded to a longer distance without loosing their burst capability.

The proactive backpressure by Qₛₜₐₜ significantly reduces the pumping amplitudes of delay variation at the receive buffer. The receive FIFO buffer can be designed smaller than in state of the art implementations. Thereby the WAN link utilization is not compromised as in some other attempts of improvement. The reason is that the necessary buffer size portion for the component Q_{dyn} is (while still depending on the round trip time) only needed for the data rate portion not being backpressured by Qₛₜₐₜ. In other words: the effective bandwidth-delay- product to be considered for the dimensioning of the FIFO buffer is lower.

Smaller buffer memory at the receiver side however contributes to cost savings and is a technological enabler to higher integration reaching the feasibility status of certain dense electronic circuit packs.

The advantage factor in respect to the buffer memory needs of the transmitter and of the receiver with a 10Gbit/s Ethernet interface and a link length of 70 km is in the range of
∼ 50 compared with methods having link length adaptation and
∼ 100 compared with methods having no link length adaptation.

The described flow control mechanism can be implemented into a network node as shown schematically in figure 2. Network node 20 contains a centrals switch matrix 22 interconnecting a number of network-network interfaces (NNI) 25a-25c, shown schematically on the right hand side, and user-network interfaces (UNI) 23a-23c. A controller 24 or system of several controllers configures the various functional blocks inside network node 20. An optional GMPLS controller 27 serves for signalling purposes to establish or configure connections in the transport network (WAN). The transport network can for instance be of the well known type SDH (Synchronous Digital Hierarchy).

User-network interfaces 23a-23c can be of any type, including interfaces for packet services such as Ethernet, MPLS, or the like. In the embodiment shown, network node 20 is equipped with interfaces 23a-23c for Ethernet service. A user-network interface contains an Ethernet interface ETH and a function for packing received Ethernet frames into multiplex units used in the transport network. In this embodiment, the latter is a virtual concatenation group circuit, which creates a virtual concatenation of a number of SDH virtual containers VC-4 for the transport of the respective Ethernet service. The transport capacity available for a certain Ethernet service can hence be chanced in granularity of VC-4, i.e. in granularity of 140 MBit/s. A virtual concatenation group is switched through switch matrix 22 to a respective network-network interface on the right hond side. A network-natwork interface 25a-25c contains a mapper MP for mapping the multiplex units into outgoing transport frames and a framer FRM that generates the transport frames.

The flow control mechanism shown in figure 1 will be implemented into the Ethernet interface ETH ol the UNI interfaces. The static backpressure component will be set in accordance with the line capacity of the incoming Ethernet line and the transport capacity configured for the outgoing virtual concatenation group. This configuration setting can be done automatically through controller 24 which configures the capacity o the virtual concatenation group transport connection through transport network. The values ol the static backpressure component can for instance be taken from a predetermined table in accordance with the number of VC-4 actually used.

Through the flow control mechanism, the problem of how to react to overload situations is shifted from the ingress node of the transport network towards the packet switch of the LAN. The packet switch can react to this by applying for instance active queue management techniques such as Random Early Drop (RED) or adaptive or weighted variants thereof.

While the above embodiments have been described for the PAUSE mechanism of Ethernet transport at the edge of an SDH transport network, it should be understood that these are just non-limiting embodiments and that the described concepts can be applied to any packet protocols that support flow control for transport over any transport network technology supporting fixed rate transport signals. Flow control in general is the process of managing the rate of dato transmission between two nodes to prevent a fast sender from overrunning a slow receiver.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for adjusting a data rate of a packet data stream between a transmitter (11) and a receiver (13) using a flow control mechanism,
comprising the steps of:
- receiving said packet data stream at the receiver (13);
- buffering received packets in a buffer memory (133);
- draining said buffer memory (133) via a Wide Area Network, WAN, link at the rate of said WAN link ; and
- sending one or more backpressure requests from said receiver (13) back to said transmitter (11) comprising a backpressure value indicative of a waiting time to suspend transmission of further data packets;
wherein said backpressure value contains a static backpressure component and a dynamic backpressure component dynamically determined from the fill state of said buffer memory,
**characterized in that** said static backpressure component is a predefined value that depends on the capacity of said WAN link, and wherein said static backpressure component is taken from a programmable table, which has been pre-provisioned in advance for all cases of possible speed rates of said WAN link.

2. A method according to claim 1, wherein said backpressure requests are sent periodically.

3. A method according to claim 2, wherein the period between backpressure requests is shorter than a round-trip-time of a link (12) between transmitter (11) and receiver (13).

4. A method according to claim 1, wherein the dynamic backpressure component is determined at points in time insertion of a backpressure request into a reverse packet stream is possible.

5. A method according to claim 1, wherein said buffer state is averaged over a predetermined period of time to filter out periodical effects onto the buffer fill state caused by said static backpressure component

6. A receiver adapted for adjusting a data rate of packet data stream received from a transmitter (11) using a flow control mechanism, the receiver comprising:
- a packet interface for receiving said packet data stream;
- a buffer memory (133) for temporarily storing received packets;
- an output interface towards a Wide Area Network, WAN, link draining said buffer memory (133) at the rate of said WAN link; and
- a circuit (132) for sending backpressure requests back to said transmitter (11) comprising a backpressure value indicative of a waiting time to suspend transmission of further data packets;
wherein said receiver (13) is adapted to determine said backpressure value from a static backpressure component and a dynamic backpressure component dynamically determined from the fill state of said buffer memory, **characterized in that** said static backpressure component is a predefined value that depends on the capacity of said WAN link, and wherein said static backpressure component is taken from a programmable table, which has been pre-provisioned in advance for all cases of possible speed rates of said WAN link (p. 6, l. 23-28).

7. A ingress network node (20) for a transport network, comprising a receiver (13) according to claim 6.

## Patentansprüche

1. Verfahren zur Anpassung einer Datenrate eines Paketdatenstroms zwischen einem Sender (11) und einem Empfänger (13) unter Verwendung eines Flusssteuerungsmechanismus, die folgenden Schritte umfassend:
- Empfangen des besagten Paketdatenstroms an einem Empfänger (13);
- Zwischenspeichern der Pakete in einem Pufferspeicher (133);
- Entleeren des besagten Pufferspeichers (133) über eine Weitverkehrsnetzwerk- bzw. WAN-Verbindung bei der Rate der besagten WAN-Verbindung; und
- Rücksenden einer oder mehrerer Gegendruckanforderungen von dem besagten Empfänger (13) an den besagten Sender (11) mit einem Gegendruckwert, welcher für eine Wartezeit für das Aussetzen der Übertragung weiterer Datenpakete indikativ ist;
wobei der besagte Gegendruckwert eine statische Gegendruckkomponente und eine dynamische Gegendruckkomponente, welche dynamisch aus dem Füllstand des besagten Pufferspeichers ermittelt wird, enthält,
**dadurch gekennzeichnet, dass** die besagte statische Gegendruckkomponente ein vordefinierter Wert ist, welcher von der Kapazität der besagten WAN-Verbindung abhängt, und wobei die besagte statische Gegendruckkomponente aus einer programmierbaren Tabelle, welche vorab für alle Fälle möglicher Geschwindigkeitsraten der besagten WAN-Verbindung bereitgestellt wurde, entnommen wird.

2. Verfahren nach Anspruch 1, wobei die besagten Gegendruckanforderungen periodisch gesendet werden.

3. Verfahren nach Anspruch 2, wobei der Zeitraum zwischen Gegendruckanforderungen kürzer ist als eine Umlaufzeit einer Verbindung (12) zwischen Sender (11) und Empfänger (13).

4. Verfahren nach Anspruch 1, wobei die dynamische Gegendruckkomponente zu Zeitpunkten ermittelt wird, zu denen ein Einfügen einer Gegendruckanforderung in einen in umgekehrter Richtung fließenden Paketstrom möglich ist.

5. Verfahren nach Anspruch 1, wobei der besagte Pufferspeicherzustand über einen vorbestimmten Zeitraum hinweg gemittelt wird, um periodische Auswirkungen auf den von der besagten statischen Gegendruckkomponente verursachten Pufferspeicherfüllstand herauszufiltern.

6. Empfänger, ausgelegt für das Anpassen eines von einem Sender (11) empfangenen Paketdatenstroms unter Verwendung eines Flusssteuerungsmechanismus, wobei der Empfänger umfasst:
- Eine Paketschnittstelle zum Empfangen des besagten Paketdatenstroms;
- einen Pufferspeicher (133) zum Zwischenspeichern der empfangenen Pakete;
- eine Ausgangsschnittstalle zu einer Weitverkehrsnetzwerk- bzw. WAN-Verbindung zum Entleeren des besagten Pufferspeichers (133) bei der Rate der besagten WAN-Verbindung; und
- einen Schaltung (132) zum Rücksenden von Gegendruckanforderungen mit einem Gegendruckwert, welcher für eine Wartezeit für das Aussetzen der Übertragung weiterer Datenpakete indikativ ist, an den besagten Sender (11);
wobei der besagte Empfänger (13) dazu ausgelegt ist, den besagten Gegendruckwert aus einer statischen Gegendruckkomponente und einer dynamischen Gegendruckkomponente, welche dynamisch aus dem Füllstand des besagten Pufferspeichers ermittelt wird, zu ermitteln, **dadurch gekennzeichnet, dass** die besagte statische Gegendruckkomponente ein vordefinierter Wert ist, welcher von der Kapazität der besagten WAN-Verbindung abhängt, und wobei die besagte statische Gegendruckkomponente aus einer programmierbaren Tabelle, welche vorab für alle Fälle möglicher Geschwindigkeitsraten der besagten WA-Verbindung bereitgestellt wurde, entnommen wird (S.6, Z. 23-28).

7. Eingangsnetzwerkknoten (20) für ein Transportnetzwerk, umfassend einen Empfänger (13) gemäß Anspruch 6.

## Revendications

1. Procédé de réglage d'un débit de données d'un flux de données en paquets entre un émetteur (11) et un récepteur (13) au moyen d'un mécanisme de contrôle de flux, comprenant les étapes suivantes :
- recevoir ledit flux de données en paquets au niveau du récepteur (13) ;
- mettre en mémoire tampon des paquets reçus dans une mémoire tampon (133) ;
- vider ladite mémoire tampon (133) par l'intermédiaire d'une liaison de réseau étendu, WAN, au débit de ladite liaison WAN ; et
- renvoyer une ou plusieurs demandes de contre-pression à partir dudit récepteur (13) vers ledit émetteur (11) comprenant une valeur de contre-pression indiquant un temps d'attente pour suspendre la transmission d'autres paquets de données ;
dans lequel ladite valeur de contre-pression contient un composant de contre-pression statique et un composant de contre-pression dynamique déterminé dynamiquement à partir de l'état de remplissage de ladite mémoire tampon,
**caractérisé en ce que** ledit composant de contre-pression statique est une valeur prédéfinie qui dépend de la capacité de ladite liaison WAN, et dans lequel ledit composant de contre-pression statique provient d'une table programmable, qui a été pré-remplie à l'avance pour tous les cas de débits possibles de ladite liaison WAN.

2. Procédé selon la revendication 1, dans lequel lesdites demandes de contre-pression sont envoyées périodiquement.

3. Procédé selon la revendication 2, dans lequel la période entre les demandes de contre-pression est plus courte qu'un temps de propagation aller-retour d'une liaison (12) entre l'émetteur (11) et le récepteur (13).

4. Procédé selon la revendication 1, dans lequel le composant de contre-pression dynamique est déterminé à des instants où l'insertion d'une demande de contre-pression dans un flux de paquets inverse est possible.

5. Procédé selon la revendication 1, dans lequel ledit état de la mémoire tampon est moyenné sur une période prédéterminée pour filtrer les effets périodiques sur l'état de remplissage de la mémoire tampon dû audit composant de contre-pression statique.

6. Récepteur adapté pour régler un débit de données d'un flux de données en paquets provenant d'un émetteur (11) au moyen d'un mécanisme de contrôle de flux, le récepteur comprenant :
- une interface de paquets pour recevoir ledit flux de données en paquets ;
- une mémoire tampon (133) pour stocker temporairement des paquets reçus ;
- une interface de sortie vers une liaison de réseau étendu, WAN, vidant ladite mémoire tampon (133) au débit de ladite liaison WAN ; et
- un circuit (132) pour renvoyer des demandes de contre-pression vers ledit émetteur (11) comprenant une valeur de contre-pression indiquant un temps d'attente pour suspendre la transmission d'autres paquets de données ;
ledit récepteur (13) étant adapté pour déterminer ladite valeur de contre-pression à partir d'un composant de contre-pression statique et d'un composant de contre-pression dynamique déterminé dynamiquement à partir de l'état de remplissage de ladite mémoire tampon, **caractérisé en ce que** ledit composant de contre-pression statique est une valeur prédéfinie qui dépend de la capacité de ladite liaison WAN, et dans lequel ledit composant de contre-pression statique provient d'une table programmable, qui a été pré-remplie à l'avance pour tous les cas de débits possibles de ladite liaison WAN (p. 6 l. 23 à 28).

7. Noeud de réseau d'entrée (20) pour un réseau de transport, comprenant un récepteur (13) selon la revendication 6.
